(19)

Europäisches
Patentamt
European
Patent Office
Office européen
des brevets

(11) **EP 4 216 095 A1**

(12) **EUROPEAN PATENT APPLICATION**

(43) Date of publication:
**26.07.2023  Bulletin 2023/30**

(21) Application number: **23020027.1**

(22) Date of filing: **19.01.2023**

(51) International Patent Classification (IPC):
**G06F 21/64** *(2013.01)*        **H04L 9/00** *(2022.01)*

(52) Cooperative Patent Classification (CPC):
**G06F 21/64; H04L 9/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **20.01.2022  US 202217579597**

(71) Applicant: **5ire LLP**
**London EC1V 2NX (GB)**

(72) Inventors:
• **Mattila, Vilma**
  **xx (GB)**
• **Gauri, Pratik**
  **xx (GB)**
• **Dwivedi, Prateek**
  **xx (GB)**

(74) Representative: **Butler, Kathryn Louise**
**Sirius IP**
**Office 4, Eight Bells House**
**14 Church Street, Tetbury**
**Gloucestershire GL8 8JG (GB)**

(54) **SYSTEM FOR PROVIDING SUSTAINABILITY-DRIVEN BLOCKCHAIN PLATFORM**

(57)    A system for providing sustainability-driven blockchain platform is disclosed. The system comprises a processor and a memory unit comprising a set of instructions executable to perform a paradigm shift from a for-profit to a for-benefit by embedding sustainability and social impact in a runtime logic. The firechain creates a user-centric sustainability-driven ecosystem to achieve sustainability deep inside a consensus mechanism and runtime logic. It allows a nominated proof-of-stake scheme with cutting-edge blockchain to have strong security guarantees. Also, it achieves high transactional throughput and enable the migration of real-world use cases that need high scalability promises on-chain, and enables cross-blockchain transfers of any type of data through bridges. Further, it upgrades the runtime logic without hard forking. The system interoperates with a variety of blockchains configured to enable cross-blockchain transfers of any type of data through bridges.

**100**

**FIG. 1**

EP 4 216 095 A1

## Description

## CROSS-REFERENCE TO RELATED APPLICATION

The present application claims the benefit of US provisional application US 17579597 filed on 20 January 2022 entitled "System for Providing Sustainability-Driven Blockchain Platform", the contents of which are hereby incorporated by reference.

## FIELD OF THE INVENTION

The present invention generally relates to blockchain technology. More specifically, the present invention relates to a system for providing a sustainability-driven blockchain with a reputation-based mechanism configured to bring a paradigm shift from a for-profit to a for-benefit by embedding sustainability and social impact in a runtime logic.

## BACKGROUND

Blockchain has a significant amount of utility over several fields. It is a decentralized distributed database for storing transactions and tracking various records of the public in a business network. This allows multiple organizations and individuals to confidently share the data across them in real-time. The blockchain connects the networks of collaborative ecosystems. This enables the automation of business logic and improves speed and efficiency.

However, despite the technological and economic advances, blockchain ecosystems are wrapped in a for-profit paradigm where the human factor is missing. The image of the future is eclipsed with incertitudes, as this absence of the service of humanity in the base layers of the conceptions and implementations of the chains leaves the logic in the bytes level without guidance by design. This paradigm focuses on gains and maximization of profit with no sustainable futurist vision being implied. Also, it is not possible to afford unwise and uncontrolled technological growth with limited resources. Thus, it needs to bring back the control and guidance over this growth towards the service of humanity.

Few existing patent references attempt to address the problems cited in the background as prior art over the presently disclosed subject matter are explained as follows:

A prior art US 20210012013 A1 to Sri Nikhil Gupta Gourisetti, et. al., entitled "Blockchain applicability framework" discloses a blockchain cybersecurity solutions and a blockchain applicability framework. A system is configured to receive parameters for a blockchain candidate application and evaluate the parameters to determine a recommendation for types of blockchain to apply to the candidate application. The recommendation may be based on an evaluation of the parameters to determine a level of applicability of blockchain usage, a level of applicability of one or more blockchain privacy types, and a level of applicability of one or more blockchain consensus types. The system may be configured to calculate an overall percentage distribution of the levels of applicability and to output an indication of the overall percentage distribution.

Another prior art US 20200026699 A1 to Jiannan Zhang, et.al., entitled "Highly Performant Decentralized Public Ledger with Hybrid Consensus" discloses a method of electing a rotating committee of byzantine fault tolerance (BFT) nodes in a decentralized computer network includes determining that a current committee of BFT nodes has outputted a predetermined number of committed transactions; identifying a plurality of candidate nodes, each respective candidate node of the plurality of candidate nodes having successfully processed, using a proof-of-work (PoW) protocol, a respective transaction of the predetermined number of committed transactions; and selecting, as a new committee of BFT nodes, a subset of the plurality of candidate nodes based on a random function.

Another prior art US 20190370793 A1 to Xiaohan Zhu, et.al., entitled "Hybrid consensus for blockchain using proof of work and proof of stake" discloses a proof of stake system that is used to create new blocks in which a proposer of a block within a validation committee selected from a candidate pool of stakeholders is chosen to write a block to the blockchain. The validation committee is selected through a proof of work method using miners to solve cryptographic puzzles. This provides a sufficient degree of randomness with regard to the selection of validation committee and the ultimate block proposer. It also adds a sufficient aspect of absolute time in that a finite amount of time is required by the miners to solve the puzzles. The identity of the proposers is random and timestamps and other indicia of time cannot be faked as there is a real-world aspect to the timestamps.

Though the above existing prior art discloses various hybrid systems and frameworks to perform selection and validation of candidates and stakeholders using blockchain, none of them disclose a sustainability-driven blockchain platform with reputation-based mechanisms by embedding sustainability and social impact in a runtime logic. Also, they lack to disclose a mechanism that allows universal and canonical guidance of the network activity and directs it toward a for-benefit focused paradigm.

Further, recent blockchain projects have chosen to substitute the inefficient Proof-of-Work component of Nakamoto's consensus protocol with Proof-of-stake, a scheme where the frequency of validators block production is proportional to their holdings instead of their computational powers, which brings environmental issues plus a possibility of maximalist cartels construction. Proof-Of-Work with Nakamoto consensus consumes an incredible amount of energy with no provable finality and no mechanism to resist cartels.

In light of the above-mentioned drawbacks, there is a need for a sustainability-driven blockchain platform with reputation-based mechanisms that embeds the for-benefit paradigm deeply inside the blockchain runtime logic, thereby ensuring the sustainability of the operation of an agreed-upon consensus mechanism. Also, there is a need for a platform that implements sustainability by design while it ensures democracy and governance, interoperability, and forkless upgradeability.

## SUMMARY OF THE INVENTION

The present invention generally discloses a system of a sustainability-driven blockchain platform or firechain. Also, the present invention discloses the system for providing sustainability-driven blockchain platform with reputation-based mechanisms that embeds the for-benefit paradigm deeply inside the blockchain runtime logic, thereby ensuring the sustainability of the operation of an agreed-upon consensus mechanism. Further, the present invention discloses the system of the sustainability-driven blockchain platform that implements sustainability by design while it ensures democracy and governance, interoperability, and forkless upgradeability.

In one embodiment, the system is executed in a network environment for providing a sustainability-driven fifth-generation blockchain or firechain or 5irechain (hereinafter referred as firechain). The system runs in the computer-implemented environment configured to provide the firechain with reputation-based mechanisms. The firechain is a fusion of blockchain and sustainability. In one embodiment, the system aims to bring a paradigm shift from a for-profit to a for-benefit by embedding sustainability and social impact in a firechain runtime logic. Also, the system implements sustainability by design while it ensures democracy and governance, interoperability, and forkless upgradeability. In one embodiment, the system is an open-source collaborative of blockchain-driven platform with Sustainable Development Goals (SDGs)-driven consensus mechanism. In one embodiment, the system is an application software or web-based application or mobile application or desktop application.

In one embodiment, the network environment comprises one or more user devices. Each user device is associated with a user/actor. In one embodiment, the user device is installed with the application software. The system further comprises a network and a sustainability-driven blockchain management system. In one embodiment, the user device is enabled to access the sustainability-driven blockchain management system via the network. In one embodiment, the user device enables the user to access one or more services provided by the system. In one embodiment, the user device is at least any one of a smartphone, a mobile phone, a tablet, a laptop, a desktop, and /or other suitable hand-held electronic communication devices. In one embodiment, the user device comprises a storage medium in communication with the network to access the sustainability-driven blockchain management system. In an embodiment, the network could be Wi-Fi, WiMAX, wireless local area network (WLAN), satellite networks, cellular networks, private networks, and the like.

In one embodiment, the sustainability-driven blockchain management system 106 comprises a computing device and one or more databases in communication with the computing device. In one embodiment, the computing device is a server. In one embodiment, the computing device could be a cloud server. In one embodiment, the server could be operated as a single computer. In some embodiments, the computer could be a touchscreen and/or non-touchscreen and adopted to run on any type of OS, such as iOS™, Windows™, Android™, Unix™, Linux™, and/or others. In one embodiment, the plurality of computers is in communication with each other, via networks. Such communication is established via any one of an application software, a mobile application, a browser, an OS, and/or any combination thereof.

In one embodiment, the database is in communication with the computing device via the network. In one embodiment, the database is accessible by the computing device. In another embodiment, the database is integrated into the computing device or separate from it. In some embodiments, the database resides in a connected server or a cloud computing service. Regardless of location, the database comprises a memory to store and organize certain data for use by the computing device.

In one embodiment, the computing device comprises a processor and a computer-readable medium or memory unit coupled to the processor. The memory unit stores a set of instructions executable by the processor configured to perform a paradigm shift from a for-profit to a for-benefit by embedding sustainability and social impact in a runtime logic. The memory unit could be RAM, ROM (including EPROM, EEPROM, PROM). In one embodiment, the user devices are configured to access the services provided by the computing device via the network. In one embodiment, the computing device is configured to provide communication between the users/actors in the blockchain platform.

In one embodiment, the processor is configured to create a user-centric sustainability-driven ecosystem configured to achieve sustainability deep inside a consensus mechanism and runtime logic; allow a nominated proof-of-stake scheme or powerful validators selection mechanism with cutting-edge blockchain to have strong security guarantees; achieve high transactional throughput and enable the migration of real-world use cases that need high scalability promises on-chain, and enables cross-blockchain transfers of any type of data through bridges; allow users/actors of the system to democratically participate in the network and propose changes using a sophisticated and transparent governance mechanism; upgrade the runtime logic without hard working, wherein the upgrade is enacted through the governance mechanism, and interoperate with a variety of blockchains configured to enable cross-blockchain transfers of any type of data through bridges.

In one embodiment, the system implements sustainability by design while it ensures democracy and governance, interoperability, and forkless upgradeability. In one embodiment, the system improves sustainability rewards distribution, interoperability bridges, identity management system, and self-sovereign DID aggregation mechanism. In one embodiment, the system is an open-source collaborative of blockchain-driven platform with sustainable development goals (SDG)-driven consensus mechanism. In one embodiment, the system ensures sustainable participation in a network or real-world is highly incentivized. In one embodiment, the system utilizes a hybrid consensus in which a fire score mechanism allows universal and canonical guidance of the network activity and directs it toward a for-benefit-focused paradigm.

In one embodiment, the system further utilizes a staking mechanism based on a Nominated Proof-of-stake (NPoS) scheme for the selection of the validator set, next block authors, and for the distribution of rewards. In one embodiment, the staking mechanism is designed with multi-layers configured to provide sustainability and positive environmental and social impact with the role of having a history of donation and charity on the reward distribution using a fire score reward distribution mechanism.

In one embodiment, the system further utilizes a proof-of-fire score that may be a nominated proof-of-stake, proof-of-benefit, and proof-of-donation. In one embodiment, the system uses one or more smart contract bridges and substrate bridges configured to communicate with other blockchains and ensure interoperability and openness. In one embodiment, the system integrates the Frontier EVM execution environment for its Ethereum compatibility layer that will allow the execution of EVM bytecode to be natively executed on top of the system. In one embodiment, the system provides an ability to execute web assembly smart contracts that are designed for correctness and efficiency. In one embodiment, the system integrates the substrate Rust-based embedded domain-specific language called ink! that allows the execution of the inherently safe, fast, and secure Rust smart contracts on top of the system's runtime logic.

In one embodiment, the proof-of-benefit scheme exists as the median by which the validators are rewarded based on a score that presents a measurement of the amount of benefit such a validator generates for the planet. The rewards are proportional to the commitment of network actors to a plurality of Sustainable Development Goals (SDGs).

In one embodiment, the proof-of-donation is based on on-chain, off-chain, and audit. The on-chain proof-of-donation is provided with a shared pot of funds controlled by the pallet itself, and absorbing imbalances from the runtime. In addition, one or more objectives of audits are tracking the history of off-chain donation of the subject beneficiary based on real-world data.

In one embodiment, the reward distribution involves treasury with beneficiary, curators, council members, trippers, registrars, and public using one or more approaches, including a first approach via the portal treasury tab and tipping system; a second approach via a tipping system, and a third approach via the adoption of Polkadot's bounties spending mechanism.

In one embodiment, the system further provides one or more services include, allowing the user to create AMMs and DEXs in an Automated Market Makers; allowing users to create sustainable solutions that hedge against volatility and help users to earn interest on their holdings; acting as a global liquidity aggregator from centralized and decentralized liquidity pools and Defi protocols; enabling users to participate in the proof-of-fire mechanism and earn attractive APY while bringing value and benefit to humanity, and encouraging users to create DAOs around sustainability and the service of humanity. In one embodiment, the user/actors are validators, nominators, and registrars.

Other objects, features and advantages of the present invention will become apparent from the following detailed description. It should be understood, however, that the detailed description and the specific examples, while indicating specific embodiments of the invention, are given by way of illustration only, since various changes and modifications within the spirit and scope of the invention will become apparent to those skilled in the art from this detailed description.

## BRIEF DESCRIPTION OF DRAWINGS

The foregoing summary, as well as the following detailed description of the invention, is better understood when read in conjunction with the appended drawings. For the purpose of illustrating the invention, exemplary constructions of the invention are shown in the drawings. However, the invention is not limited to the specific methods and structures disclosed herein. The description of a method step or a structure referenced by a numeral in a drawing is applicable to the description of that method step or structure shown by that same numeral in any subsequent drawing herein.

**Fig. 1** shows a computer-implemented system executed in a network environment for providing sustainability-driven fifth-generation blockchain in an embodiment of the present invention.

**Fig. 2** shows a high-level overview of the sustainability-driven blockchain architecture in one embodiment of the present invention.

**Fig. 3** shows one or more proof-of-fire components in one embodiment of the present invention.

**Fig. 4** shows a staking mechanism of the sustainability-driven blockchain in one embodiment of the present invention.

**Fig. 5** shows a process of audit-based reward distribution in the sustainability-driven blockchain in one embodiment of the present invention.

**Fig. 6** shows a real-world off-chain donation history registrar in one embodiment of the present invention.

**Fig. 7** shows an identity registrar of the sustainability-driven blockchain in one embodiment of the present invention.

**Fig. 8** shows one or more sustainable development goals (SDGs) compliance registrars in one embodiment of the present invention.

## DETAILED DESCRIPTION OF EMBODIMENTS

The present invention is best understood by reference to the detailed figures and description set forth herein.

It is expected that the present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

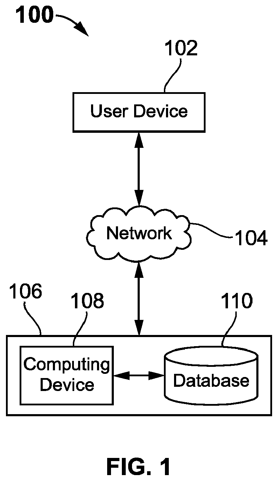

Referring to **Fig. 1,** a computer-implemented system executed in a network environment **100** for providing a sustainability-driven fifth-generation blockchain or firechain or 5irechain (hereinafter referred as firechain), according to one embodiment of the present invention. The system runs in the computer-implemented environment **100** configured to provide the firechain with reputation-based mechanisms. The firechain is a fusion of blockchain and sustainability. In one embodiment, the system aims to bring a paradigm shift from a for-profit to a for-benefit by embedding sustainability and social impact in a firechain runtime logic. Also, the system implements sustainability by design while it ensures democracy and governance, interoperability, and forkless upgradeability. In one embodiment, the system is an open-source collaborative of blockchain-driven platform with Sustainable Development Goals (SDGs)-driven consensus mechanism. In one embodiment, the system is an application software or web-based application or mobile application or desktop application.

In one embodiment, the network environment **100** comprises one or more user devices **102.** Each user device **102** is associated with a user/actor. In one embodiment, the user device **102** is installed with the application software. The system further comprises a network **104** and a sustainability-driven blockchain management system **106.** In one embodiment, the user device **102** is enabled to access the sustainability-driven blockchain management system **106** via the network **104.** In one embodiment, the user device **102** enables the user to access one or more services provided by the system. In one embodiment, the user device **102** is at least any one of a smartphone, a mobile phone, a tablet, a laptop, a desktop, and /or other suitable hand-held electronic communication devices. In one embodiment, the user device **102** comprises a storage medium in communication with the network **104** to access the sustainability-driven blockchain management system **106.** In an embodiment, the network **104** could be Wi-Fi, WiMAX, wireless local area network (WLAN), satellite networks, cellular networks, private networks, and the like.

In one embodiment, the sustainability-driven blockchain management system **106** comprises a computing device **108** and one or more databases **110** in communication with the computing device **108.** In one embodiment, the computing device **108** is a server. In one embodiment, the computing device **108** could be a cloud server. In one embodiment, the server could be operated as a single computer. In some embodiments, the computer could be a touchscreen and/or non-touchscreen and adopted to run on any type of OS, such as iOS™, Windows™, Android™, Unix™, Linux™, and/or others. In one embodiment, the plurality of computers is in communication with each other, via networks. Such communication is established via any one of an application software, a mobile application, a browser, an OS, and/or any combination thereof.

In one embodiment, the database **110** is in communication with the computing device **108** via the network **104.** In one embodiment, the database **110** is accessible by the computing device **108.** In another embodiment, the database **110** is integrated into the computing device **108** or separate from it. In some embodiments, the database **110** resides in a connected server or a cloud computing service. Regardless of location, the database **110** comprises a memory to store and organize certain data for use by the computing device **108.**

In one embodiment, the computing device **108** comprises a processor and a computer-readable medium or memory unit coupled to the processor. The memory unit stores a set of instructions executable by the processor configured to perform a paradigm shift from a for-profit to a for-benefit by embedding sustainability and social impact in a runtime logic. The memory unit could be RAM, ROM (including EPROM, EEPROM, PROM). In one embodiment, the user devices **102** are configured to access the services provided by the computing device **108** via the network **104.** In one embodiment, the computing device **108** is configured to provide communication between the users/actors in the blockchain platform.

In one embodiment, the processor is configured to, create a user-centric sustainability-driven ecosystem configured to achieve sustainability deep inside a consensus mechanism and runtime logic; allow a nominated proof-of-stake scheme or powerful validators selection mechanism with cutting-edge blockchain to have strong security guarantees; achieve high transactional throughput and enable the migration of real-world use cases that need high scalability promises on-chain, and enables cross-blockchain transfers of any type of data through bridges; allow users/actors of the system to democratically participate in the network and propose changes using a sophisticated and transparent governance mechanism; upgrade the runtime logic without hard working, wherein the upgrade is enacted through the governance mechanism, and interoperate with a variety of blockchains configured to enable cross-blockchain transfers of any type of data through bridges.

In one embodiment, the system provides the paradigm shift from a for-profit to a for-benefit by embedding the sustainability and social impact deep inside the runtime logic. The system ensures the activities which are aligned with the SDGs either on-chain or in the real world are highly incentivized with the cutting-edge multilayered Proof-Of-Fire (PoF) consensus mechanism and reward distribution engine.

In one embodiment, the system improves sustainability rewards distribution, interoperability bridges, identity management system, and self-sovereign DID aggregation mechanism. In one embodiment, the system is an open-source collaborative of blockchain-driven platform with sustainable development goals (SDG)-driven consensus mechanism. In one embodiment, the system ensures sustainable participation in a network or real-world is highly incentivized. In one embodiment, the system utilizes a hybrid consensus in which a fire score mechanism allows universal and canonical guidance of the network activity and directs it toward a for-benefit-focused paradigm.

In one embodiment, the system further utilizes a staking mechanism based on a Nominated Proof-of-stake (NPoS) scheme for the selection of the validator set, next block authors, and for the distribution of rewards. In one embodiment, the staking mechanism is designed with multi-layers configured to provide sustainability and positive environmental and social impact with the role of having a history of donation and charity on the reward distribution using a fire score reward distribution mechanism.

In one embodiment, the system further utilizes a proof-of-fire score that may be a nominated proof-of-stake, proof-of-benefit, and proof-of-donation. In one embodiment, the system uses one or more smart contract bridges and substrate bridges configured to communicate with other blockchains and ensure interoperability and openness. In one embodiment, the system integrates the Frontier EVM execution environment for its Ethereum compatibility layer that will allow the execution of EVM bytecode to be natively executed on top of the system. In one embodiment, the system provides an ability to execute web assembly smart contracts that are designed for correctness and efficiency. In one embodiment, the system integrates the substrate Rust-based embedded domain-specific language called ink! that allows the execution of the inherently safe, fast, and secure Rust smart contracts on top of the system's runtime logic.

In one embodiment, the proof-of-benefit scheme exists as the median by which the validators are rewarded based on a score that presents a measurement of the amount of benefit such a validator generates for the planet. The rewards are proportional to the commitment of network actors to a plurality of Sustainable Development Goals (SDGs). In one embodiment, the proof-of-donation is based on on-chain, off-chain, and audit. The on-chain proof-of-donation is provided with a shared pot of funds controlled by the pallet itself, and absorbing imbalances from the runtime. In addition, one or more objectives of audits are tracking the history of off-chain donation of the subject beneficiary based on real-world data.

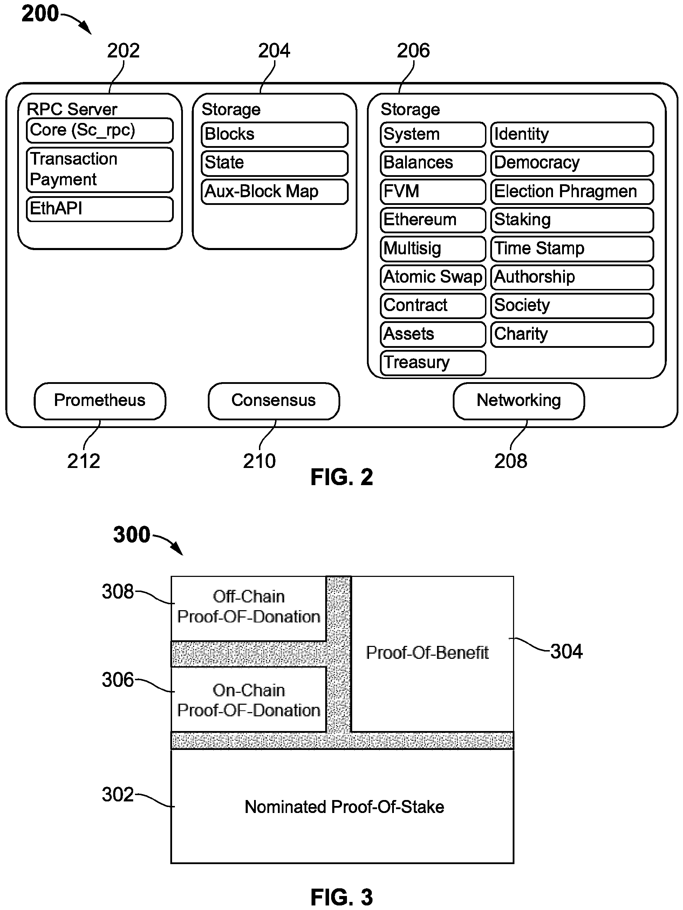

Referring to **Fig. 2,** a high-level overview of an architectural framework **200** of the firechain, according to one embodiment of the present invention. The architectural framework **200** provides one or more strong guarantees such as sustainability by design, security, transactional scalability, governance and democracy, future-proof and forkless upgradeability, and interoperability. In sustainability by design, it creates a user-centric sustainability-driven ecosystem. This is achieved by having sustainability deep inside a firechain consensus mechanism and runtime logic. Thus, making sure that sustainable participation in the network or the real world is highly incentivized. In security, the cutting-edge technology that is used to build firechain and the Nominated Poof-Of-Stake (NPoS) scheme allows firechain to have strong security guarantees that lacks in other older blockchains. In transactional scalability, the firechain is able to achieve high transactional throughput and it enables the migration of real-world use cases that need high scalability promises on-chain. In governance and democracy, the firechain provides a sophisticated and transparent governance mechanism that allows everyone to democratically participate in the network and propose changes. In future-proof and forkless upgradeability, based on Web Assembly (wsam), the firechain is able to upgrade its runtime logic without hard forking. These upgrades are enacted through the firechain governance mechanism. In interoperability, the firechain has the ability to interoperate with a variety of blockchains. It enables cross-blockchain transfers of any type of data through bridges.

In one embodiment, the architectural framework **200** comprises a remote procedural call (RPC) server **202,** a storage medium **204,** a runtime logic **206,** a network **208,** a consensus **210,** and a prometheus **212.** the RPC server **202** includes core (Sc_rpc), transaction payment, and ethapi that implements the general Ethereum API functions. The storage medium **204** includes a plurality of blocks, state, and aux-block map.

The runtime logic **206** includes system, balances, Ethereum Virtual Machine (EVM), Ethereum, Multisig, Atomic swap, contract, assets, treasury, identity, democracy, election phragmen, staking, timestamp, authorship, society, and charity.

Consensus **210** is a method of reaching an agreement over a shared state. For the state of the blockchain to continue to build and move forward, all nodes in the network must agree and reach a consensus. It permits synchronization between decentralized nodes. Moreover, consensus engines as the primary media allow to reach the agreement over a shared state between all of the nodes, and give an objective view over the current state. To avoid the substitution of the inefficient proof-of-work component of Nakamoto's consensus protocol with Proof-of-stake, PoS-based blockchains invite the formation of pools on-chain and allow stakeholders to elect validators that represent them.

In one embodiment, the firechain utilizes a hybrid consensus for block production and provable finality, thereby allowing a fast block production and a higher level of security. In one embodiment, the hybrid consensus is a combination of Blind Assignment for Blockchain Extension (BABE) and GHOST-based Recursive Ancestor Deriving Prefix Agreement (GRANDPA). In one embodiment, the firechain utilizes a fire score mechanism that allows universal and canonical guidance of the network activity and directs it toward a for benefit-focused paradigm, in which highly rewarding for all the actors while maintaining speed and transaction throughput better than any standard Proof-Of-Stake scheme and high levels of security and efficiency never attained by neither PoW's nor PoS's, All of this in the most human-focused sustainable way where bringing value to existence is highly incentivized. The block production comprises the following modules:

Blind Assignment for Blockchain Extension (BABE):

BABE is a slot-based block production mechanism that provides a set of active validators. BABE assigns slots according to the evaluation of a verifiable random function. On every slot, all authorities try to generate a random instance of the VRF, and based on a comparison between a threshold that is proportional to their stake and the VRF value generated by each authority, a producer of the current block is chosen. Moreover, in order to achieve democracy, a proof of the VRF execution is used by the other participants to be sure of the slot.

Finality:

To trust public ledgers, it is necessary to ensure that the public ledger has reached a consensus on a particular block and it is considered as finality. First-generation blockchains do not consider finality as a priority. In such blockchains, users are not deterministically sure that their transactions are finalized. Thus, a Nakamoto style eventual consensus is only able to achieve a probabilistic finality. Furthermore, it would take tens of minutes. To be able to achieve a deterministic finality, a finality gadget must be added to the logic of the blockchain, in which a set of voters vote on a particular block and when a threshold of $\frac{2}{3}$ of voters is achieved, then a block is considered final.

GHOST-based Recursive Ancestor Deriving Prefix Agreement (GRANDPA):

GRANDPA is the finality gadget used in the multi-layer consensus algorithm. For example: GRANDPA provides block finalization by working on rounds, and each round has a set of 3 eligible voters, 2 are assumed to be honest. Validators vote on a block they consider final once $\frac{2}{3}$ of authorities decision is taken, they reach an agreement on-chain state rather than blocks, thus speeding up the finalization even in the most adversarial environments or bad networking conditions, which make it a potent add-on and base layer for building the fire score sustainable engine.

Fork choice rule algorithm:

Chain forks generally occur when multiple blocks reference the same parent block. Solving such a temporal inconsistency is must in order to have a globally agreed-upon canonical chain. A fork choice rule is designed to select the most consistent chain. Some referenced examples of such algorithms are the longest chain rule and the Greedy Heaviest Observed SubTree (GHOST) rule. Combining BABE and GRANDPA, the fork choice in firechain is built on the chain with the most primary blocks.

In one embodiment, the firechain makes heavy use of bridges in order to communicate with other blockchains and in order to ensure interoperability and openness. So, with the integration of such mechanisms, firechain is going to be compatible with other blockchains like Ethereum or any other blockchain, specifically substrate-based chains. Thus, opening a tremendous stream of on-chain data to be treated and this will lead to rich application logic on top of the firechain. The bridging methodologies used with firechain are smart contract bridges and substrate bridges. In one embodiment, the firechain implements the smart contract bridges to allow the users/actors to make compatibility with the non-substrate blockchains. In one embodiment, the firechain makes compatibility with the substrate blockchains via the substrate bridges or bridge pallet.

In one embodiment, the users/actors may be nominators, validators, council, and/or technical committee. The nominators provide sustainability and security to the firechain by electing the validators and staking the Sire tokens holders that cannot afford to run and maintain a node. The validators and fire tokens holders are highly motivated to become nominators and earn income by electing validators of their choice. Nevertheless, they need to choose wisely from the set of available validators as those with a higher reputation are rewarded the most, not those who have more at stake.

The validators are one of the major actors in the firechain, as they are the ones that participate in the verification and the production of blocks according to the firechain consensus mechanism, and their activities appliance with the sustainable vision based on the fire score. The validators are highly incentivized to be for-benefit driven and to bring impact to the world.

The council is an on-chain entity that is an assembly of many elected actors. The council consists of a fixed number of actors. One of the main tasks of the council is to control the way by which the treasury funds are spent. It also held responsibility for governance tasks such as proposing sensible referenda, canceling malicious referenda, and electing a technical committee. The proposals made by this entity require a majority voting in order for this to go to governance. The council members have the right to exercise a veto. The council has the right to cancel malicious referendums if the two-thirds majority agreed upon the danger of such a referendum execution or if it does not appeal to the global vision of the firechain, which is sustainability and donation-oriented mindset. Additionally, the council has the right to blacklist harmful proposals. The election of the council members is held by the democratic sequential Phragmen method.

The firechain adopts the Polkadot vision for the main chambers of governance. The global architecture of the technical committee is composed of members that have demonstrated a good knowledge of the firechain workflow and runtime. Also, it welcomes technical teams that are building on the same for-benefit paradigm vision. The technical committee has the ability to submit emergency proposals, such proposals are prioritized and supported by the council as they are usually based on urgent updates to the runtime and suggested bug fixes of the code.

In one embodiment, the smart contract is a procedural and executable program containing a set of functions and states that runs on top of a blockchain while residing at a specific address on the blockchain storage as an account. The smart contracts have balances and the ability to send transactions. The smart contracts are different from the traditional contracts in a way that their execution is not controlled by anyone. The firechain will provide two smart contract virtual machines that will be added to the runtime with the intention of creating its own Web Assembly targeted smart contract that will come with its own embedded domain-specific language in the near future.

In one embodiment, the firechain integrates the Frontier EVM execution environment for its Ethereum compatibility layer that will allow the execution of EVM bytecode to be natively executed on top of the firechain. So, developers can easily migrate their Ethereum Dapps (decentralized applications) to firechain with minimal to zero modification, and they will still use the same Ethereum-based tools and frameworks. The firechain will support Solidity, Vyper, and any other language that compiles to EVM bytecode. Plus support for all of the already existing Ethereum RPC methods. So, developers are guaranteed a seamless migration of decentralized applications to the sustainable for-benefit firechain network.

In one embodiment, the firechain also provides the ability to execute WebAssembly smart contracts that are designed for correctness and efficiency in mind. More precisely firechain will integrate the substrate Rust-based embedded domain-specific language called ink! That will allow the execution of the inherently safe, fast, and secure Rust smart contracts on top of the firechain runtime logic. This integration will make use of the Contract Pallet already provided by the substrate framework.

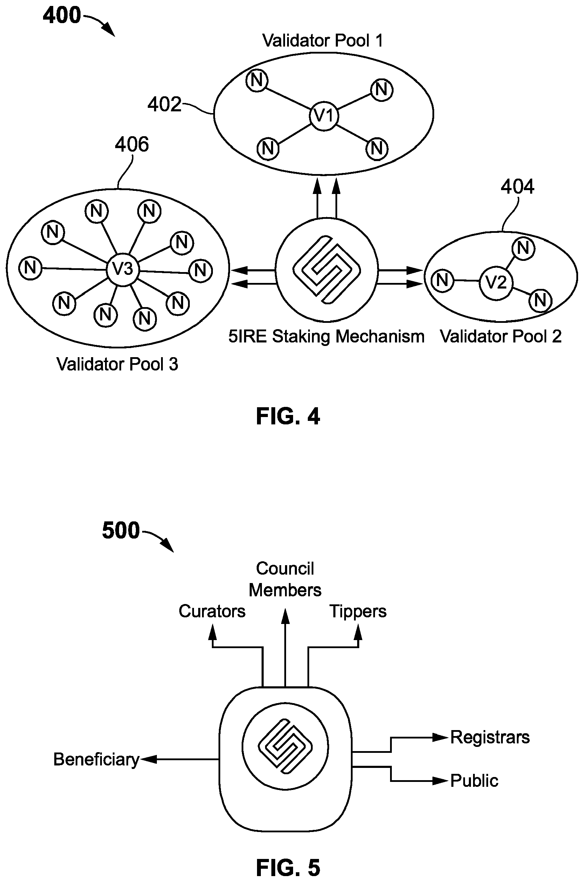

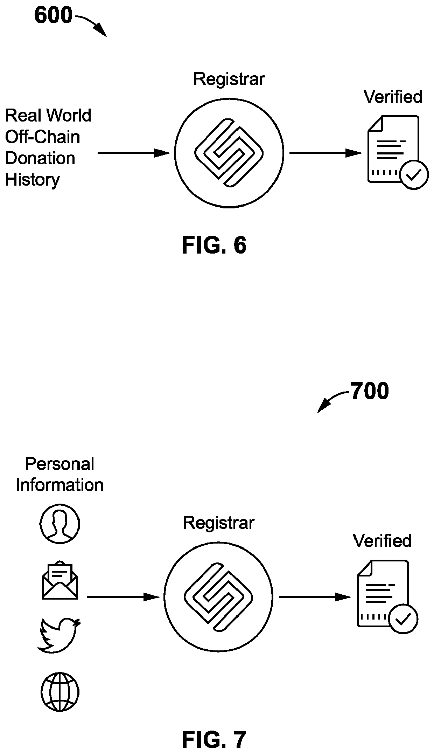

Referring to **Fig. 3,** one or more proof-of-fire components **300** of the firechain, according to one embodiment of the present invention. The one or more components **300** comprises a nominated proof-of-stake (NPoS) **302** (as shown in **Fig. 4),** a proof-of-benefit **304,** an on-chain proof-of-donation **306,** and an off-chain proof-of-donation **308** (as shown in **Fig. 6).** In one embodiment, the firechain adopts a cutting-edge variant of PoS called nominated proof-of-stake (NPoS) **302.** the NPoS **302** is a powerful validators selection mechanism that includes high-security guarantees, fair representation of all the actors, scalability, and efficiency by design. A democratic approach where everyone can become a validator candidate or a nominator approving and backing validators with economic incentives. It is highly recommended for them to back up validators with a good reputation as they will be able to collect higher rewards based on their network participation, whether it is block production rewards or transaction fees. The higher reward for electing validators that their activities are applying to the SDGs, thus bringing a paradigm shift from a for-profit to a for-benefit, and also validators that generate the most positive social impact by building a history of social and environmental driven donations gains more reputation thus more rewards. Moreover, while electing validators that have a low reputation lowers to negative economic returns.

In one embodiment, a fire staking mechanism **400** of the firechain is disclosed in **Fig. 4.** The fire staking mechanism **400** comprises a validator pool-1 **402,** a validator pool-2 **404,** and a validator pool-3 **406.** Each validator pool **(402, 404,** and **406)** comprises a validator and one or more nominators. In one embodiment, the fire staking mechanism **400** is based on the NPoS scheme for the selection of the validator set, the next block authors, and for the distribution of rewards. In one embodiment, the fire staking mechanism **400** is multi-layer staking mechanism that is designed with sustainability and positive environmental and social impact without forgetting the role of having a history of donation and charity on the reward distribution. In one embodiment, the main actors on the fire score reward distribution mechanism are validators, nominators, and registrars.

In one embodiment, the fire staking mechanism **400** further includes a payment system or a base layer that distributes validators' rewards equally regardless of the stake backing them (Validators-Nominators stake) for their participation in block authoring in the BABE block production scheme or in guaranteeing finality of transactions in the GRANDPA finality gadget. Each validator is backed by a set of nominators with their stakes. Upon an era (which is a predefined period where NPoS base layer rewards are distributed), rewards are distributed to validators based on their collected era point which adds a probabilistic component to the reward distribution, generally, an era is 24 hours but can be modified by governance.

In one embodiment, the fire staking mechanism **400** further includes a sustainability layer. In firechain, the global approach is that any entity that has proven a sustainable behavior, not just on-chain, but also regarding its off-chain day-to-day activity is rewarded for taking such a for-benefit paradigm as essential to its activities. For this reason, additional rewards are distributed to validators proportional to their fire score calculated by registrar audits and submitted to the treasury, upon a budget period which is chosen to be seven days voted upon reward proposals. The additional rewards are then distributed to the validators that achieve higher fire scores based on their appliance with the Proof-of-benefit (PoB) and Proof-of-Donation (PoD) of the fire score reward distribution mechanism.

Still referring to **Fig. 3,** the proof-of-benefit scheme **304** exists as the median by which the validators are rewarded based on a score that presents a measurement of the amount of benefit such a validator generates for the planet. Thus, bringing value and positive impact has never been as rewarding as when on-chain and off-chain activities are done on firechain. The rewards are proportional to the commitment of network actors to the SDGs. For this reason, the validators are incentivized that empower the sustainable vision highly. For example, a validator that is proven to be helping in achieving quality education or taking urgent action to combat climate change and its impacts is more rewarded than the one who does not. Thus, the firechain achieves sustainability by design.

The process by which the score of a validator is determined is based on audits made by trusted and democratically elected registrars that perform audits on the giving active validators, this is done by submitting a proposal, and if enough votes are gained, the reward is then distributed to the concerned validator from the fire treasury.

For decentralization purposes, all the users not just audit registrars have the right to submit spending proposals toward beneficiaries that are proven with a for-benefit mindset. Only proposals that are in accord with the Sire sustainable vision are accepted. And beneficiaries are not only limited to validators, everyone that brings meaningful impact not just to the fire ecosystem but to humanity and the world by activities conforming to the SDGs. Further, the proof-of-benefit uses the Treasury for its rewards distributions.

The treasury is highly important for the firechain logic. The treasury is a primary media to distribute incentives to the network actors who apply to the proof-of-benefit by respecting and investing in the achievement of the SDGs and also for the proof-of donation part of consensus and staking mechanisms where rewards are distributed for the identified actors that spend for charity or investing in the proposed projects that are democratically voted upon, the only project that brings benefit to humanity will get chosen, and such actors that have gained a reputation-based on their historical donation register are going to be rewarded by the treasury.

The Treasury is defined as a pot of funds that are collected in many ways such as transaction fees, donations, slashing, inflation, Etc. The main spending way of such a mechanism is by the making of spending proposals when approved by the council and after the waiting period "budget period" ends they get distributed to the concerned actors [6], and for us, in firechain the proposals and spending are directed toward a for-benefit paradigm to ensure that the actors that work more for humanity and sustainability are the most rewarded by the staking mechanism and to ensure the funding of the actors and project that brings value and thus leading the 5th industrial revolution where bringing sustainability and support for the SDGs is more profitable than acting against this paradigm. Thus, achieving and motivating sustainable actions by design. The duration of the budget period is adjustable according to the governance so that the distribution period is democratically chosen. a default budget period value will be defined in a way that assures that the 17 SDG registrars have enough time to do the audits. When token holders want to propose a spend from the treasury, they must put a reserve deposit of a small percentage of the proposed spend, which is returned if the proposal is accepted or slashed if rejected. The treasury is combined with the sustainable fire score mechanism as follows.

A fusion between the Treasury and the sustainable fire score mechanism:

The democratic vision enables the creation of the for-benefit paradigm. This is an adopted solution combined with the governance mechanism to bring the sustainability vision, thus formalizing the problem of rewarding the actors on-chain. This fusion is based on specific actors, where elected and trusted registrars that held the identity of the validators and their reputation-based audits performed by the registrars toward each validator who has already been judged by a registrar, this later perform an audit on validators that assign a fire score to them based on their appliance with the SDGs and a detailed audit is submitted to the 5ireassembly for further discussion. If accepted and the proposal period ends rewards are distributed to the validator that deserves, the reward is proportional to the fire score assigned to the validator. The same for the proof-of-donation, where the reward is based on the history of donations that the validator made.

The Treasury can be funded by inflation, transaction fees, and slashing. In inflation, the staking ratio is chosen to be xx%, and with an inflation rate of xx%, those ratios are very important for the network, and any deviation from them will make a proportion of this inflation go to the Treasury. To give a clear image of this, imagine the staking ratio to be 60%, and the inflation rate is 5%, then if 60% of the token distribution are staked, then the totality of the inflation goes to validators as rewards, and if it is less or greater than the staking ratio, some the remaining tokens go to the Treasury. In transaction fees, while the totality of each block's transaction fees goes to the validator authoring the block, the remaining portion goes to the treasury. In slashing, the penalties made to misbehaving validators while active cause him to lose a part of his staked tokens. The slashed tokens go to the treasury with a reward going to the actor that reported the misbehaving of the validator.

Referring to **fig. 5,** a process **500** of audit-based reward distribution, according to one embodiment of the present invention. In one embodiment, the reward distribution uses one or more approaches for submitting for-benefit spending proposals. In one embodiment, the reward distribution involves treasury with beneficiary, curators, council members, trippers, registrars, and public using one or more approaches, including a first approach via the portal treasury tab and tipping system; a second approach via a tipping system, and a third approach via the adoption of Polkadot's bounties spending mechanism.

The first approach performs the following steps. At one step, the first approach creates a proposal through the fire portal treasury tab. At another step, a proposed spend extrinsic is submitted and specified with the beneficiary address and the deposit of a bond which is a small percentage of the requested amount, the existence of the deposit bond, this amount is burned if the proposal is rejected, or refunded otherwise. There is no possibility for proposals revocation, they are either accepted or rejected to make sure that registrars and the public alike announce proposals only when they are sure and that they will hold responsibility for this action. At another step, after the submission process, the mechanism will automatically take the required bond deposit. Since proposals have no metadata it's up to the proposers to explain the reasons in the main Sire community mechanism that will be chosen later. At another step, when the proposal is successfully submitted, the council members start a motion about it so it might be accepted or rejected, when a threshold of majority members is attained the decision is taken. At another step, the threshold is determined after a successful launch of firechain, generally three-fifths for accept motions and one-half for rejection motions.

The second approach performs the following steps through a Tipping system. At one step, the tips are suggested by anyone, not just audit registrars. There is no definite value for tips; their value is determined as the average median of all the tippers' suggested values. For the first implementation of firechain, generally, the tippers are the same as the Council members or a subset of them, but in the near future, Council member and tippers are going to be separated gradually until they become independent subsets. At another step, when more than half of the tippers endorse a tip value, the proposal enters a closing phase and the median of the ripped values are considered for payout. Tips generally contain the beneficiary address plus a reasonable argument which is generally a UTF-8 encoded URL pointing to the explanation and the audit report on the Sire general public communication and publication of the audit report platform that would be determined later. At another step, the proposer of the tip is required as for general proposals to place a small bond deposit, and the proposer is rewarded with a finder fee which is paid out from the total amount of the tip.

The third approach is the most convenient and prioritized Proof-Of-Benefit reward distribution mechanism through the adoption of Polkadot's bounties spending mechanism, since there are limitations on the council members capabilities and expertise on judging and curating all of the proposals relative to each one of the SDGs even if individual members might have the expertise, probability the majority won't and also council member can become overwhelmed with proposals. The process of curating and judging proposals might be delegated to Curators.

The curators are experts on each one of the SDGs, they can be defined as addresses with control over a portion of the treasury. And their expertise makes them worthy of judging the audits submitted by registrars and users spending proposals alike on each topic or goal. When an audit registrar submits a bounty proposal, they define the Curator with enough expertise in the audit domain of expertise. When the proposal passes the Council members select the Curators, and those Curators need to make a deposit in order to take the position, this mechanism assure punishment when malicious or erroneous behavior is coming from the Curator but if they make a successful judgment, the deposit is transferred back plus a part of the audit reward. The Curator reward is included in the audit estimated payout and specified by the proposer as a Curator fee to incentivize them to take the task and invest with their energy and expertise and the judgment of the audit.

Further referring to **Fig. 3,** the proof-of-donation is a firechain sustainability reward distribution mechanism that has another layer that focuses on rewarding charity-oriented activities. These activities are either on-chain or in the real world to formalize and implement this part of the scheme to devise the tracking and rewarding of charity behavior to two main parts. An On-chain Proof-Of-Donation **306** and an Off-chain audit-based Proof-Of-Donation **308** which is analogical to the mechanism deployed in the creation of the Proof-Of-Donation but different in terms of the specified set of objectives and body of work.

In one embodiment, the on-chain proof-of-donation **306** is based on the substrate charity pallet which represents a charitable organization that collects funds into a self-contained pot that is controlled by the pallet itself and allocates the funds to charitable causes and what makes it suitable for the implementation of the on-chain proof-of-donation are two useful concepts include, a shared pot of funds controlled by the charity pallets itself and absorbing imbalances from the runtime. The charity pallets account is controlled by the pallet itself, not a specific user cryptographic key pair to avoid potential misuse of a pot controlled by someone. The charity can receive funds in two main ways. The first is donations. The users can donate to the pallet, and users that have a good history of donations gain a strong reputation thus having more potential on receiving rewards based on the on-chain proof-of-donation. The second is imbalances. The charity can also receive funds by absorbing imbalances created in the runtime. This is making firechain sustainable by design. Imbalances are created when fire tokens are burned or minted. Charity's objective is to collect funds through Negative Imbalances that are triggered when slashing of a validator happens, transactions fees, or when other pallets inside the runtime burn funds as a part of an incentive-alignment mechanism.

Referring to **Fig. 6,** a real-world off-chain donation history registrar **600,** according to one embodiment of the present invention. The real-world off-chain donation history registrar **600** comprises a set of real-world off-chain donation history. The real-world off-chain donation history is verified by the registrar. In one embodiment, real-world off-chain donation history registrar **600** utilizes an audit-based off-chain proof-of-donation. The audit-based off-chain proof-of-donation is analogical in the design to determine the working of proof-of-benefit as an audit-based paradigm but different in terms of the specified set of objectives and body of work. In the proof-of-donations, the objectives of audits are about tracking the history of the off-chain donation of the subject beneficiary based on real-world data. The workflow is similar to the proof-of-benefit.

In one embodiment, the firechain may be a substrate chain that takes the advantage of the cutting-edge technology of the parity rust-based framework for the creation of firechain. The features that are needed to fulfill the democratic vision and this technology allows forkless upgradeability, so any voted upon runtime logic modification can be achieved without needing to hard fork. The hard fork network causes destruction and divisibility instead of power and union and most importantly staying loyal to the sustainability and for benefit prior goal of the network. In order to achieve this, Polkadot's highly sophisticated governance mechanism is used. The governance mechanism allows continuous evolving in accordance with the assembled stakeholders. Where the commandment of the network is in favor of the majority and made by them. The canonical universal governance system is highly suitable for the firechain network. Thus, the governance mechanism is adopted to ensure that the sustainable for-benefit paradigm is always maintained and in a democratic way. To make this possible, Polkadot various novel mechanisms are used with a revolutionary state-transition function stored on-chain and defined in Web Assembly, a platform-agnostic intermediate language, and referenda with a dynamically adjustable threshold that defines the meaning of super-majority.

In order to bring network modifications to life, the governance mechanism composes the will of the Public (token holders) and council together as administrators of the network upgrades decisions, no matter who made a proposal, this latter must go through a referendum to let any active actors of firechain weighted by stake vote on a decision.

Referenda is an inclusive stake-based voting mechanism, a composition of referendums, where each referendum has a proposal that is a function call in the runtime with high privileges. Such functions have the power to even change the entire code that defines the runtime logic of the chain. Referendums are procedural votes. The reason for this lay in the notion of a Problem as defined in complexity theory. Where a problem is a generic question that contains parameters and variables, when instantiated, an instance of the problem is obtained. It is shown that most of the problems can be formalized as an equivalence of a decisional problem which can be answered in a binary way. Thus, referenda are defined as discrete events in time with a fixed voting period, and the only voting options are "Yes" or "No". The ways referenda can be started with are publicly submitted proposals, council-based proposals, and technical committee-based emergency proposals that have been approved by the council.

Referring to **Fig. 7,** an identity mechanism **700,** according to one embodiment of the present invention. The firechain adopts the substrate identity mechanism **700** that allows users of the chain to couple pieces of information to their on-chain accounts and submit a request in the form of judgment to a registrar. The definition of identity is one of the main mechanisms that allow the fire score mechanism to work, for this reason. It is a democratic and functional scheme to know information about actors such as validators and they are highly motivated to set an identity for two main causes, the first one is they will gain a good reputation, so nominators can put trust on them, the second one is that validators with an identity gain advantage in the fire score mechanism and in earning rewards based on audits.

The registrars are important network participants that have mainly two functions, the first one is making sure of the identities, the second function is doing audits on identifiable accounts. So, they are a core participant in the firechain network, for this reason, the voting mechanism ensures that the chosen registrars are liable and trustworthy. Anyone can become a registrar by submitting a proposal to Democracy with a pre-image hash of the submitted pieces of information. The registrar can set up a fee for their services, for example, identity provider type of registrar can put the reasonable amount for these services, and the registrars that perform audits can make higher fees for the service, as this is a complicated ongoing process that determines the amount of reward that will get distributed to the audited validators.

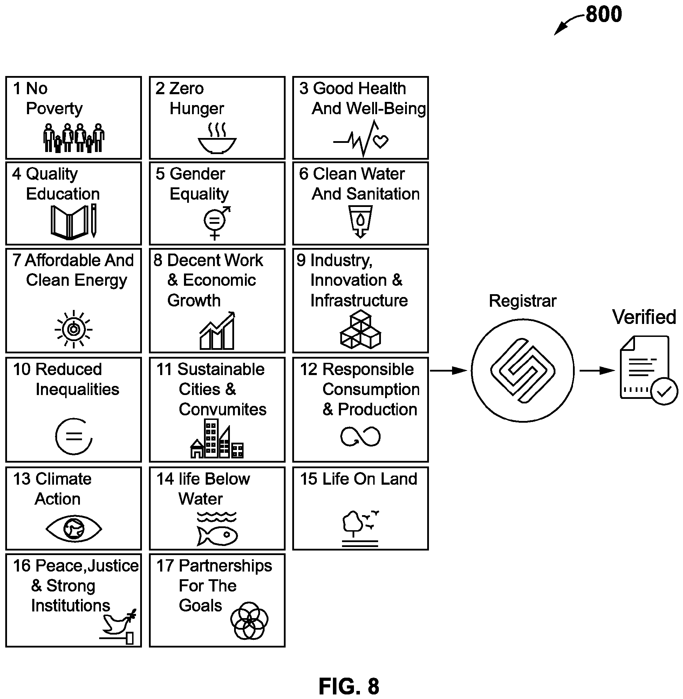

Referring to **Fig. 8,** a flow diagram **800** of a plurality of SDGs compliance registrars, according to one embodiment of the present invention. In one embodiment, registrars are key actors in firechain, especially Audit Registrars. Democracy makes sure of the candidates' worthiness for such an important role in the network. The trusted elected audit registrar's main goal is performing audits about validators that have made a judgment request, this audit determines the appliance of the claiming validator to the SDGs. In one embodiment, the SDGs are no poverty, zero hunger, good health and well-being, quality education, gender equality, clean water and sanitation, affordable and clean energy, decent work and economic growth, industry, innovation and infrastructure, reduced inequalities, sustainable cities and communities, responsible consumption and production, climate action, life below water, life on land, peace, justice and strong institutions, and partnerships for the goals. They might as well submit proposals to the Treasury spending, as Treasury is putting trust in their judgments, those spending proposals are in the form of fire score rewards or funding projects that are shown to be in accordance with the for-benefit paradigm and impactful projects that promote sustainability and bring positive value to the earth and to other human beings. To stay true to the democratic vision without posing a standard for the score calculation by the user, it is up to registrars, and the community to vote on registrars that their score calculation is suitable with the for-benefit paradigm.

In one embodiment, the substrate chain uses the judgment notation to describe the request action users take in order to validate the injection of their information on-chain, so the judgments are made by registrars. Validators are required to pay judgment fees to registrars, whether it is an identity judgment or an audit judgment. Logically the fees for the audits are higher than the ones concerning identities. In order to make the process more declarative and transparent, the notion of confidence levels is introduced that are used when registrars provide judgment toward an entity that might select a level of confidence in their attestation.

The notion of confidence levels is unknown, reasonable, known well, out of date, low quality, and erroneous. Unknown means that no judgment has been made. It is the value by default. Reasonable means that the provided information is reasonable, but there was no performing of in-depth verifications by a registrar (e.g., Audits, donation history, formal KYC process). Known Good means that the registrar has performed an audit and has certified the correctness of the provided pieces of information. Out of Date means that the provided pieces of information used to be known well, but now they are considered as outdated. Low Quality means that the pieces of information have low quality, this is generally done by a performance of a poor audit, but they can become up to date and modified. Erroneous means that the provided pieces of information are erroneous or hide malicious intent. As the firechain is based on trust and reputations, including registrars, and it gains more trust by performing proper and reasonable audits about validators appliances with sustainable development goals. Solid shreds of evidence should back such audits.

In one embodiment, the firechain makes heavy use of the substrate democracy pallet to handle the administration of stakeholders voting. The democracy pallet launches a referendum from a proposal that it takes from the queues and repeats this process every launch period, defined in the runtime. Any referendum can be a simple majority in which a/2 +1 vote to a yes or no to decide the outcome. To achieve Democracy, the system utilizes the Phragmén election method. The method selects validators based on a Phragmén method derivative which is called a sequential Phragmén method. The sequential Phragmén method is heavily used in a NPoS scheme based on their stake and the stake of the nominators that backs them. In one embodiment, sequential Phragmén method tries to calibrate the variance of the weight between validators.

The Phragmén method is one of the interpretations of Non-Partisan Proportional Representation. It was named after Edvard Phragmén. This method came to resolve a candidacy problem giving a set of candidates, a fixed number of seats that have less cardinality than the set of candidates against a set of giving voters, the voters have the ability to give their votes to any subset of the candidates set excluding the empty set, and the set of all candidates.

In one embodiment, the Phragmén method may be unordered Phragmén method or weighted Phragmén method. In the unordered Phragmén method, the Phragmén method is an iterative method that portrays an election scenario where a set of candidates compete against each other in order to win seats and achieve this by voting. Let us discuss the situation where voters have the same voting weights, which is not the case in a blockchain scenario. Seats are given sequentially until the election achieves the number of seats. Each group of an equivalent ballot is given a place number, which is a non-negative rational number, this number is the fractional number of seats elected so far by these ballots; it is always assured that the place numbers are always equal to the number of the allocated seats.

In the weighted Phragmén method, candidates usually do not have the same weight (Stake). In the voting models (validator selection, governance voting), elections are weighted proportionally to voters' holdings (tokens). Thus, there is a bias in the voting power. The weighted phragmén method allows us to achieve a justified representation of all the participants, this way, democracy is achieved by allowing minorities participation while preserving the freedom of choice.

Use cases of Firechain:

E-governance:

The smart contracts of blockchain technology allow the execution of business logic on-chain. They are open platforms for a whole new paradigm like the permission to create digital assets where smart contract uses embedded logic by defining a canonical interaction way for those digital tokens to interact and function (e.g., represent voting rights or a stake in protocol revenue). One of the powerful features of smart contracts is that they are tamper-proof mechanisms. No external counterparty can tamper with the terms and the logic embedded on them. They are a form of law described as code on-chain. They can become the new form of multiparty business automation.

One of the main goals of the firechain is to become a governance framework that proposes a strategic pathway that enables interoperability between off-chain digital legacy systems and governmental infrastructures with blockchain technology, thus enabling a fusion between the two currently distinct fields and bringing the powerful features of blockchain to legacy systems. The adoption of blockchains by organizations have pointed that the integration and interoperability between blockchains and other systems is one of the most promising use case of distributed ledger technology and yet the most challenging one. Through the integration of the Sire ecosystem with an off-chain worker oracle mechanism will enable a whole new shift in how legacy systems work where the processing of citizens and users claims can become verified through firechain and be assured of the non-repudiation of the whole process of claiming and verification.

The benefit of the interoperability of legacy systems with fire ecosystem and the reputationbased technical infrastructure include, but not limited to, governance by design, transparency and accountability, sophisticated document control systems, reducing corruption and error by using smart contracts, elimination of inefficient intermediaries and introduction of data validation through off-chain oracle systems.

In one embodiment, the system further provides one or more services include, allowing the user to create AMMs and DEXs in an Automated Market Makers; allowing users to create sustainable solutions that hedge against volatility and help users to earn interest on their holdings; acting as a global liquidity aggregator from centralized and decentralized liquidity pools and Defi protocols; enabling users to participate in the proof-of-fire mechanism and earn attractive APY while bringing value and benefit to humanity, and encouraging users to create DAOs around sustainability and the service of humanity. In one embodiment, the user/actors are validators, nominators, and registrars.

Potential use cases for legacy systems, government, and the public sector:

Agricultural insurance:

Present-day mechanisms used by the insurance systems for issuing and validating claims and payout processes are respectively inefficient and time-consuming. This is the main reason for index-based insurance not being adopted by smallholder farmers despite their benefits in providing social protection for farmers affected by floods and natural catastrophes in the hope of reducing the impact they suffer as a result. The firechain provides a smart contract index insurance that brings automated instant payouts to the insured farmers, and with the help of a decentralized oracle network system, firechain eliminates the need for intermediaries' assessment in case of natural catastrophes through automated data feeds.

Identity Management and Self-Sovereign Digital Identity Aggregation:

The firechain will give legacy systems, governments/enterprises workers, and citizens the opportunity of owning their self-sovereign identities while still permitting the verification of credentials on-chain. Nowadays, digital legacy management tooling encounters severe security, scalability, and elasticity issues. The firechain identity management's vision is to give back the right of owning identities for citizens and users alike. A self-sovereign approach where identities reside on the user side while maintaining a cryptographical process of issuing and verifying credentials and information contained on them without revealing other sensitive data. The powerful mechanism is conforming to the W3C standard that defines decentralized identity as a globally unique persistent identifier that does not require a centralized registration authority; instead, it is cryptographically issued and verified. However present-day decentralized identity systems are very fragmented and form isolated frameworks with no means for interoperability, making the existence of a universally unique decentralized identity management system very challenging, such a dream is very promising for various scenarios like borderless credential verifications, network actors reputation in an on-chain governance and credit lending. The firechain not only aims to become a decentralized identity standard implementation but also aims to solve this system's fragmentation with a built-in identity aggregation mechanism for other decentralized solutions and legacy systems.

The fire identity guarantees include decentralization and democracy. In decentralization, the process of claiming and issuing is an on-chain process. In democracy, the fire score instantiation and registrars are tracked by the sustainable fire democratic governance mechanism that is based on the Phragmén method.

The firechain-based self-sovereign digital identity management system can form the basis for many governmental tracking and validation services such as verification of academic credentials and validation of professional qualifications, electronic healthcare records and vaccination tracking, middleware for the collection of payroll taxes, and management of student loans and innovation grants. The firechain may also be used for land registry and land-title transfers, intellectual property protection and digital rights management, voting, and healthcare.

Society and Smart Cities:

According to the United Nations data booklet "The World Cities in 2018", By 2030, 60 percent of the world population will live in cities. And as cited in the booklet, understanding the key trends in urbanization is crucial to the implementation of the 2030 Agenda for Sustainable Development, including Sustainable Development goals. This increase in the urbanization rate of growth surely can bring economic benefits. A considerable need for wrapping this growth rate in a for-benefit sustainable operating model shift instead of a destructive for-profit paradigm. The implementation of Smart City Technologies is highlighted for blockchain utilization in building smart cities of the future including, a clear and sustainable vision, interoperability, formulation of regional organization/initiative, and scalability and future-proof.

The firechain leads to the 5th industrial revolution by bringing a shift in how the network activities and shareholders toward the service of humanity, the missing factor in all existing frameworks of interaction. Thus, bringing control and sustainability in the runtime logic of the firechain and consensus mechanism in order to serve humanity, not technology. The firechain is the missing point on providing an implementation of the framework of G20 Global Smart Cities Alliance common principles to build Smart City 5.0 includes sustainability and service of humanity by design, interoperability through bridges, governance and democracy by design, scalability by the cutting-edge nominated proof-of-stake, and future-proof by forkless upgradeability of the runtime logic.

Defi 5.0: User-centric decentralized finance:

The decentralized finance on top of the firechain provides the possibility of existence to various financial applications and services in the most sustainable way with its user-centric vision that does not include intermediaries. The firechain purpose is to make sustainable Defi accessible to the unbanked people and ensure that financial services are working in a for-benefit paradigm. The firechain will host a variety of applications and services alike.

5IRE-20 Tokens and NFTs:

The firechain supports all the existing token standards like SIRE-20, SIRE721, 5IRE777, and 5IRE1155. the user can create their own tokens or migrate their already existing tokens.

Liquidity Bridges:

With firechain, the existing tokens are wrapped and transferred the liquidity from blockchains like Ethereum to firechain.

Automated Market Makers:

With firechain, the user/actor creates AMMs and DEXs that take advantage of the firechain ecosystem.

Stablecoins and Money Markets:

The user/actor creates sustainable solutions that hedge against volatility and help users earn interest on their holdings.

Global Liquidity Aggregator:

The firechain can act as a liquidity aggregator from centralized and decentralized liquidity pools and Defi protocols.

Sustainable Staking and Yield Farming:

The user/actor may participate in the Proof-of-Fire mechanism and earn attractive APY while bringing value and benefit to humanity.

Sustainable DAOs:

The users/actors are encouraged to create DAOs around sustainability and the service of humanity.

United Nations Sustainable Development Goals (SDGs) As Indexes:

The firechain will work on the tokenization of the 17 SDGs and bring them on-chain for the purpose of making the for-benefit paradigm more promising by taking advantage of the firechain transparency and accountability features and the sustainable reward distribution.

Advantageously, the firechain is a sustainability-driven blockchain with reputation-based mechanisms.

In the near future, firechain aims to become an ecosystem that focuses on positive impact and invites other blockchains and projects on top of the firechain to adopt this vision and innovate in the way they utilize those mechanisms. Firechain highlights many building blocks that are combined to further create tools and schemes that are going to make the shift from the fourth industrial revolution to the fifth. The Stakeholders, Developers, Legacy agencies, and users alike are invited to be creative in the way they are using firechain and the way they will interact with the ecosystem. firechain is focused on improving its sustainability rewards distribution, interoperability bridges, and identity management systems as they are key components for firechain. Firechain is focusing on the implementation of the self-sovereign DID Aggregation mechanism. Also in the near future, firechain aims to have its own eDSL Wasm smart contract language and will furthermore add features through governance.

The foregoing description comprise illustrative embodiments of the present invention. Having thus described exemplary embodiments of the present invention, it should be noted by those skilled in the art that the within disclosures are exemplary only, and that various other alternatives, adaptations, and modifications may be made within the scope of the present invention. Merely listing or numbering the steps of a method in a certain order does not constitute any limitation on the order of the steps of that method. Many modifications and other embodiments of the invention will come to mind to one skilled in the art to which this invention pertains having the benefit of the teachings in the foregoing descriptions. Although specific terms may be employed herein, they are used only in generic and descriptive sense and not for purposes of limitation. Accordingly, the present invention is not limited to the specific embodiments illustrated herein.

## Claims

1. A computer-implemented system for providing a sustainability-driven blockchain platform or firechain, comprising:

   a processor and a computer-readable medium coupled to the processor, the computer-readable medium comprises a set of instructions executable by the processor configured to perform a paradigm shift from a for-profit to a for-benefit by embedding sustainability and social impact in a runtime logic, wherein the system is in communication with a server through a communication network, wherein the processor is configured to;

   create a user-centric sustainability-driven ecosystem configured to achieve sustainability deep inside a consensus mechanism and runtime logic;

   allow a nominated proof-of-stake scheme or powerful validators selection mechanism with cutting-edge blockchain to have strong security guarantees;
   achieve high transactional throughput and enable the migration of real-world use cases that need high scalability promises on-chain, and enables cross-blockchain transfers of any type of data through bridges;
   allow users/actors of the system to democratically participate in the network and propose changes using a sophisticated and transparent governance mechanism;
   upgrade the runtime logic without hard forking, wherein the upgrade is enacted through the governance mechanism, and
   interoperate with a variety of blockchains configured to enable cross-blockchain transfers of any type of data through bridges.

2. The system according to claim 1, implements sustainability by design while it ensures democracy and governance, interoperability, and forkless upgradeability.

3. The system according to claim 1, improves sustainability rewards distribution, interoperability bridges, identity management system, and self-sovereign DID aggregation mechanism, wherein the reward distribution involves treasury with beneficiary, curators, council members, trippers, registrars, and public using one or more approaches, include

   a first approach via the portal treasury tab and tipping system;
   a second approach via a tipping system, and
   a third approach via the adoption of Polkadot's bounties spending mechanism.

4. The system according to claim 1, is an open-source collaborative of blockchain-driven platform with sustainable development goals (SDG)-driven consensus mechanism.

5. The system according to claim 1, ensures sustainable participation in a network or real-world is highly incentivized.

6. The system according to claim 1, utilizes a hybrid consensus in which a fire score mechanism allows universal and canonical guidance of the network activity and directs it toward a for-benefit-focused paradigm.

7. The system according to claim 1, further utilizes a staking mechanism based on a Nominated Proof-of-stake (NPoS) scheme for the selection of the validator set, next block authors, and for the distribution of rewards.

8. The system according to claim 1, wherein the staking mechanism is designed with multi-layers configured to provide sustainability and positive environmental and social impact with the role of having a history of donation and charity on the reward distribution using a fire score reward distribution mechanism.

9. The system according to claim 1, further utilizes a proof-of-fire score that may be a nominated proof-of-stake, proof-of-benefit, and proof-of-donation, wherein the proof-of-donation is based on on-chain, off-chain, and audit, wherein

the on-chain proof-of-donation is provided with a shared pot of funds controlled by the pallet itself, and absorbing imbalances from the runtime, and
one or more objectives of audits are tracking the history of off-chain donation of the subject beneficiary based on real-world data.

10. The system according to claim 1, uses one or more smart contract bridges and substrate bridges configured to communicate with other blockchains and ensure interoperability and openness.

11. The system according to claim 1, integrates the Frontier EVM execution environment for its Ethereum compatibility layer that will allow the execution of EVM bytecode to be natively executed on top of the system.

12. The system according to claim 1, provides an ability to execute web assembly smart contracts that are designed for correctness and efficiency.

13. The system according to claim 1, integrates the substrate Rust-based embedded domain-specific language called ink! that allows the execution of the inherently safe, fast, and secure Rust smart contracts on top of the system's runtime logic

14. The system according to claim 1, wherein the proof-of-benefit scheme exists as the median by which the validators are rewarded based on a score that presents a measurement of the amount of benefit such a validator generates for the planet,
wherein the rewards are proportional to the commitment of network actors to a plurality of Sustainable Development Goals (SDGs).

15. The system according to claim 1, further provides one or more services include,

allowing user to create AMMs and DEXs in an Automated Market Makers;
allowing users to create sustainable solutions that hedge against volatility and help users to earn interest on their holdings;
acting as a global liquidity aggregator from centralized and decentralized liquidity pools and Defi protocols;
enabling users to participate in the proof-of-fire mechanism and earn attractive APY while bringing value and benefit to humanity, and
encouraging users to create DAOs around sustainability and the service of humanity.

**100**

102

User Device

Network — 104

106  108                    110

Computing
Device          Database

FIG. 1

**200**

202  204  206

RPC Server
Core (Sc_rpc)
Transaction Payment
EthAPI

Storage
Blocks
State
Aux-Block Map

Storage
System    Identity
Balances  Democracy
FVM       Election Phragmen
Ethereum  Staking
Multisig  Time Stamp
Atomic Swap  Authorship
Contract  Society
Assets    Charity
Treasury

Prometheus    Consensus    Networking

212    210    208

**FIG. 2**

**300**

308 — Off-Chain Proof-OF-Donation

306 — On-Chain Proof-OF-Donation

Proof-Of-Benefit — 304

302 — Nominated Proof-Of-Stake

**FIG. 3**

400

Validator Pool 1

402

406

404

5IRE Staking Mechanism    Validator Pool 2

Validator Pool 3

**FIG. 4**

500

Council
Members
Curators          Tippers

Beneficiary

Registrars

Public

**FIG. 5**

600

Registrar

Verified

Real World
Off-Chain
Donation
History

**FIG. 6**

700

Personal
Information

Registrar

Verified

**FIG. 7**

FIG. 8

Europäisches
Patentamt

European
Patent Office

Office européen
des brevets

# EUROPEAN SEARCH REPORT

Application Number

**EP 23 02 0027**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/141360 A1 (RAHEMAN FAZAL [IN]) 9 July 2020 (2020-07-09) * paragraph [0037] – paragraph [0042] * * figure 1 * | 1-15 | INV. G06F21/64 H04L9/00 |
| A | AGGELOS KIAYIAS ET AL: "SoK: Blockchain Governance", ARXIV.ORG, CORNELL UNIVERSITY LIBRARY, 201 OLIN LIBRARY CORNELL UNIVERSITY ITHACA, NY 14853, 19 January 2022 (2022-01-19), XP091134040, * abstract * | 1-15 | |
| A | JEFF BURDGES ET AL: "Overview of Polkadot and its Design Considerations", IACR, INTERNATIONAL ASSOCIATION FOR CRYPTOLOGIC RESEARCH , vol. 20200603:094743 29 May 2020 (2020-05-29), pages 1-41, XP061060982, Retrieved from the Internet: URL:https://eprint.iacr.org/2020/641.pdf [retrieved on 2020-05-29] * abstract * | 1-15 | |

TECHNICAL FIELDS
SEARCHED (IPC)

G06F
H04L

The present search report has been drawn up for all claims

| Place of search | Date of completion of the search | Examiner |
|---|---|---|
| The Hague | 6 June 2023 | Ströbeck, Anders |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

              

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 02 0027

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2023

| Patent document cited in search report | Publication date | Patent family member(s) | Publication date |
|---|---|---|---|
| WO 2020141360 A1 | 09-07-2020 | EP 3888043 A1 | 06-10-2021 |
| | | US 2022114670 A1 | 14-04-2022 |
| | | WO 2020141360 A1 | 09-07-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 17579597 B
- US 20210012013 A1, Sri Nikhil Gupta Gourisetti
- US 20200026699 A1, Jiannan Zhang
- US 20190370793 A1, Xiaohan Zhu